(19) Europäisches Patentamt
European Patent Office
Office européen des brevets

(11) Veröffentlichungsnummer: **0 336 151 B1**

(12) **EUROPÄISCHE PATENTSCHRIFT**

(45) Veröffentlichungstag der Patentschrift: **17.03.93**

(51) Int. Cl.$^5$: **A01N 25/30**, A01N 57/20, //(A01N57/20,25:30)

(21) Anmeldenummer: **89104517.1**

(22) Anmeldetag: **14.03.89**

Teilanmeldung 92114412.7 eingereicht am 14/03/89.

# (54) Flüssige herbizide Mittel.

(30) Priorität: **18.03.88 DE 3809159**

(43) Veröffentlichungstag der Anmeldung: **11.10.89 Patentblatt 89/41**

(45) Bekanntmachung des Hinweises auf die Patenterteilung: **17.03.93 Patentblatt 93/11**

(84) Benannte Vertragsstaaten: **AT BE CH DE FR GB GR IT LI NL SE**

(56) Entgegenhaltungen:
**EP-A- 0 048 436**
**DE-A- 1 542 926**

**CHEMICAL PATENTS INDEX, Basic Abstracts Journal, Sekfion C, AGDOC, Woche 8705, 1. APril 1987, Derwent Publications, London, GB.**

(73) Patentinhaber: **HOECHST AKTIENGESELLSCHAFT**
**Postfach 80 03 20**
**W-6230 Frankfurt am Main 80(DE)**

(72) Erfinder: **Albrecht, Konrad, Dr.**
**Sodener Strasse 64**
**W-6233 Kelkheim (Taunus)(DE)**
Erfinder: **Kocur, Jean, Dr.**
**Am Heiligenstock 1**
**W-6238 Hofheim am Taunus(DE)**
Erfinder: **Langelüddeke, Peter, Dr.**
**Nelkenweg 5**
**W-6238 Hofheim am Taunus(DE)**

EP 0 336 151 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der US-PS 4 168 963 ist bekannt, daß Verbindungen der Formel

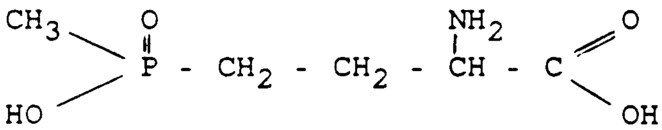

und ihre Derivate (I) eine gute und breite Wirksamkeit gegen Unkräuter vieler botanischer Familien besitzen. Die Verbindungen I enthalten ein asymmetrisches Kohlenstoffatom. Die Formel I umfaßt alle Stereoisomeren (D- und L-Form), insbesondere das biologisch aktive L-Enantiomere. Von besonderer Bedeutung ist das Ammoniumsalz dieser Verbindungen (L-Form ebenso wie Racemat).

Die Verbindungen eignen sich zur nichtselektiven Bekämpfung von unerwünschtem Pflanzenwuchs, z.B. auf landwirtschaftlichen Kulturflächen, im Weinbau, in Obst- und Ölpalmenplantagen, an Industrie- und Eisenbahnanlagen. Sie werden meist als wäßrige Lösungen formuliert.

Ferner ist bekannt, daß sich die Wirksamkeit von Herbiziden in vielen Fällen durch Zugabe von oberflächenaktiven Mitteln verbessern läßt (vgl. DE-OS 2 725 823 und 2 554 232). Besonders häufig werden zu diesem Zweck ($C_{12}$-$C_{18}$)-Fettalkoholpolyglykoläther und Alkylphenolpolyglykoläther verwendet. In der EP-A 0 048 436 wird gezeigt, daß Kokosfettalkyl-benzyl-dimethyl-ammoniumchlorid oder $C_{12}$-$C_{18}$-Alkylpolyglykoläthersulfate die Wirkung von I gegenüber den im Vergleich mitgeprüften Fettalkohol- und Alkylphenolpolyglykoläthern verstärken. Allerdings sind die wasserhaltigen flüssigen Formulierungen von I nur stabil, wenn ihnen polare Lösungsmittel, wie z.B. Dimethylformamid, N-Methylpyrrolidon oder Äthylenglykolmonomethyläther zugesetzt werden. Andernfalls treten in der Formulierung Phasentrennungen in wirkstoffangereicherte, tensidärmere und wirkstoffärmere, tensidangereicherte Schichten ein.

Ferner hat sich gezeigt, daß die Kältestabilität dieser Formulierungen oft für die Erfordernisse der Praxis unzureichend ist. Zwar fallen Wirkstoff bzw. Netzmittel erst unter dem Gefrierpunkt zwischen 0 und -10 ° C aus, bei im Frost gelagerten Präparaten kann es jedoch bei Abfüllungen aus größeren Behältern in Kleingebinde doch noch Probleme geben. So müssen z.B. die Großgebinde erst längere Zeit warm gelagert werden, damit sich Wirkstoff und Tensid wieder auflösen und die Formulierung homogen in Kleinpackungen abgefüllt werden kann. Weiterhin sollten die Präparate wegen der Brennbarkeit und einer möglichen Anwendergefährdung keine oder möglichst geringe Mengen organischer Lösungsmittel enthalten. Wichtig ist auch eine Verbesserung der Regenbeständigkeit der Formulierungen, welche als Wirkstoff Verbindungen der Formel I oder deren Derivate enthalten, da diese Wirkstoffe wasserlöslich sind und über die Blattoberfläche von den Pflanzen aufgenommen werden. Somit besteht vor allem in tropischen Gebieten die Gefahr, daß der Wirkstoff durch nach der Applikation einsetzenden Regen von der Blattoberfläche abgewaschen und damit unwirksam wird. Zusätze an Haftmitteln, wie man sie zur Verbesserung der Regenbeständigkeit in Spritzpulvern verwendet, wie z.B. Polyvinylalkohole, - pyrrolidone, -acrylate, -acetate, Hydroxiäthyl-, Carbäthoxiäthyl-, Methylcellulosen, Dextrine, hydrolysierte Peptide, Heteropolysaccharide, Ligninsulfonate, kationaktive Verbindungen oder Mineralöle hatten bei Versuchen keine Effekte gezeigt.

Somit sind unter praktischen Gesichtspunkten insbesondere die folgenden Forderungen an flüssige Formulierungen der

Verbindungen der Formel I zu stellen:

a) hohe Kältestabilität

b) bessere Herbizidwirkung gegenüber den bekannten Formulierungen

c) hohe Regenbeständigkeit und

d) möglichst geringer Zusatz von organischen Lösungsmitteln.

Überraschenderweise wurde nun gefunden, daß sich Formulierungen der obengenannten Wirkstoffe, welche diese verbesserten Eigenschaften aufweisen, durch die Verwendung bestimmter Tenside erhalten lassen.

Gegenstand der vorliegenden Erfindung sind daher flüssige herbizide Mittel, gekennzeichnet durch einen Gehalt an einer Verbindung der Formel

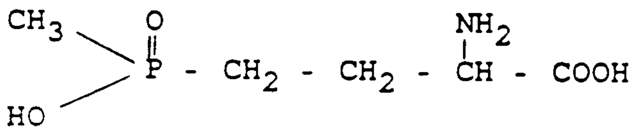

in Form des Racemates oder des L-Enantiomeren,
deren Niederalkylestern oder Salzen mit Säuren oder Basen (I) in Kombination mit Tensiden in Form von

a) ($C_{12}$-$C_{18}$)-Alkyldimethyl-, ($C_{10}$-$C_{18}$)-Fettsäureamidopropyldimethyl- oder ($C_{10}$-$C_{18}$)-Fettsäureamidoethyldimethyl- aminoxiden.

Bevorzugte Anwendung als Tenside finden dabei ($C_{12}$-$C_{18}$)-Alkyldimethylaminoxide, sowie die Mischungen dieser Verbindungen mit ($C_{10}$-$C_{18}$)-Fettalkoholpolyglykolethersulfaten.

Eine weitere bevorzugte Ausgestaltung der erfindungsgemäßen Mittel besteht darin, daß sie neben 5-40 Gew.-% einer Verbindung I den 0,5-8-fachen Gewichtsanteil der erfindungsgemäßen Tenside und 0-20 Gew.-% eines wassermischbaren polaren Lösungsmittels enthalten, wie z.B. von Methylglykol, Propylenglykolmonomethylether, PEG 200, Isopropanol, DMF oder NMP.

Weitere oberflächenaktive Substanzen sind insbesondere zwischen 4-15 Gew.-% in der fertigen Formulierung enthalten.

Die erfindungsgemäßen Mittel enthalten in Wasser gelöster Form 5-40 Gew.-% eines Wirkstoffes der Formel I sowie 0,5-8 Teile der erfindungsgemäßen Tenside pro Wirkstoffteil. Zusätzlich können weitere oberflächenaktive Mittel zur Verbesserung des Benetzungsvermögens, Haft- und Bindemittel, Harnstoff oder anorganische Salze wie z.B. Ammoniumsulfat, wasserlösliche Lösungsmittel sowie Entschäumer enthalten sein. Auch können diese Tenside vorteilhaft in Kombinationsformulierungen einer Verbindung I mit anderen herbiziden Wirkstoffen wie z.B. Simazin, Terbutylazin, Diuron, Monolinuron, Metolachlor, Chlortoluron, Oxyfluorfen, Bifenox, Imazethapyr, Chlorimuron-ethyl, Sulfonylharnstoffen wie z.B. Sulfometuron, Metsulfuron eingesetzt werden und die Wirkung von I verstärken.

Die Tenside können auch vor der Applikation unmittelbar der Spritzbrühe der Wirkstofflösung von I oder den Mischformulierungen mit den genannten Herbiziden zugesetzt werden.

Die erfindungsgemäßen Mittel liegen als Lösungen, in Mischungen mit wasserunlöslichen Wirkstoffen wie z.B. den o.a. Triazin- und Harnstoffherbizid-Wirkstoffen als Suspensionskonzentrate vor, in welchen die unlöslichen Wirkstoffe in der festen, die Verbindung I und die erfindungsgemäßen Tenside in der wässrigen flüssigen Phase enthalten sind. Niedrigschmelzende Wirkstoffe oder flüssige Wirkstoffe wie Metolachlor werden mit einer Verbindung I und den Tensiden in Form einer stabilen Emulsion zubereitet, in welcher in der wässrigen Phase die Verbindung I und die erfindungsgemäßen Tenside, in der "öligen" flüssigen Phase der wasserunlösliche flüssige oder der in organischen Lösungsmitteln gelöste Wirkstoff enthalten ist, wobei die organischen Lösungsmittel selbst nicht wasserlöslich sein sollten.

Die Herstellung derartiger Mischformulierungen kann auf verschiedene Weise erfolgen. Zum einen kann man so vorgehen, daß man die einzelnen Bestandteile separat in Form von Einzeldispersionen und Lösungen herstellt und diese dann unter Verwendung einer Kolloidmühle mischt. Ebenso ist es möglich, die Wirkstoffe der feindispersen Phase zusammen zu vermahlen und dieser Mischdispersion die Wirkstofflösung zuzusetzen. Prinzipiell kann man auch alle Wirkstoffe in einem Durchgang zur gewünschten Mischformulierung verarbeiten.

Die auf diese Weise hergestellten Kombinationsformulierungen sind lagerstabil, zeigen nahezu keine chemischen Veränderungen und sind anwendungstechnisch einfach zu handhaben.

Die erfindungsgemäßen Mittel werden nach Verdünnen in Wasser appliziert. Als Wirkstoffe der Verbindung I kommen insbesondere Verbindungen in Betracht, die in der US-PS 4168 963 beschrieben sind oder entsprechend hergestellt werden können wie z.B. (3-Amino-3-carboxy-propyl)-methylphosphinsäure (Phosphinothricin), deren Hydrochlorid, Mononatrium-, Dinatrium-, Monokalium-, Dikalium-, Monocalcium-, Ammonium-, $NH_3(CH_3)^+$-, $NH_2(CH_3)_2^+$-, $NH(CH_3)_3^+$-, $NH(CH_3)_2(C_2H_4OH)^+$- oder $NH_2(CH_3)(C_2H_4OH)^+$-Salze oder deren Methyl-, Ethyl-, Propyl- oder Butylester.

Zur Herstellung der erfindungsgemäßen Mittel löst man den Wirkstoff in Wasser und setzt die errechnete Menge des wirkungsverstärkenden oberflächenaktiven Mittels und gegebenenfalls weitere übliche Hilfsmittel wie Lösungsvermittler (Propylenglykolmonomethylether, Glykole, Polyglykole, Blockpolymere, DMF, N-Methylpyrrolidon etc.), weitere Netzmittel, Farbstoffe oder Entschäumer (z.B. Silicone, Polyäthylenpolypropylenglykole, Seifen etc.) zu und vermischt innig.

Die erfindungsgemäßen Tenside und die weiteren üblichen Formulierungshilfsmittel werden beispielsweise beschrieben in:

Watkins, "Handbook of Insecticide Dust Diluents and Carriers", 2nd Ed., Darland Books, Caldwell N.J.; H.v.Olphen, "Introduction to Clay Colloid Chemistry", 2nd Ed., J. Wiley & Sons, N.Y.; Marschen, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Als Beispiele für die erfindungsgemäßen Tenside seien genannt:

- ($C_{12}$-$C_{18}$)-Alkyldimethylaminoxide: Alkamox LO® (Alkaril Chemicals), Aromox DMM CD-N® (Akzo Chemie), Genaminox® (Hoechst AG), Nissan Unisafe ALM (Nippon Oil & Fats Co.)
- Fettsäureamidopropyldimethylaminoxide: Alkamox CAPO® (Alkaril Chem.) Rewominox B 204® (Rewo Chem. Werke), Steinapon AM B13® (Rewo Chem. Werke)
- Fettalkoholpolyglykoläthersulfate: Genapol LRO®, Genapol LRC®, (Hoechst AG), Gezavon LL 20® (Zimmerli AG), Texapon ASV®, Texapon Na®, Texapon M (Henkel KG)

Die nachfolgenden Beispiele dienen zur Erläuterung der Erfindung:

A) Zusammensetzungen und Stabilität erfindungsgemäßer Wirkstofformulierungen

Tabelle 1

| Formulierung Nr. | Wirkstoff % | Wasser % | org. LM % | oberflächenaktives Mittel % | | Erscheinungsform nach 14 Tagen bei 20°C | 0°C | unter 0°C ab | Chem. Stabilität nach 3 Monaten 50°C |
|---|---|---|---|---|---|---|---|---|---|
| Vergleichs-mittel | 20 | 50 | 10 Prop.-M. | 20 | Fettalkoholpolyglykoläthersulfat-Na | klar | klar | - 3°C trüb | stabil |
| 1 | 18 | 52 | 10 Prop.-M. | 20 | Lauryl-dimethyl-aminoxid | klar | klar | -10°C trüb | stabil |
| 2 | 19 | 53 | 10 Prop.-M. | 18 | $C_{12}$-$C_{18}$-Alkyl-dimethyl-aminoxid | klar | klar | - 7 °C trüb | stabil |
| 3 | 19 | 60 | ohne | 21 | Fettsäureamidopropyl-dimethylaminoxid | klar | klar | -13°C trüb | stabil |

Na = Natriumsalz
klar = klare Lösung
Wirkstoff: Phosphinothricin (Ammoniumsalz)

Prop.-M. = Propylenglykolmonomethyläther
trüb = flüssig, getrübt durch Kristalle

## B) Biologische Beispiele

### Beispiel 1

Im Gewächshaus angezogene Gerstenpflanzen wurden im 3-Blattstadium mit in Wasser verdünnten Formulierungen (Wirkstoff:Phosphinothricin-Ammoniumsalz) mit den in der Tab. 2 angegebenen Wirkstoffkonzentrationen besprüht. Als Standard diente das in Tabelle 1 aufgeführte Vergleichsmittel. Nach 17 Tagen wurde eine Bonitur der Pflanzen vorgenommen. Die Schädigung (Wirkung) ist in % ausgedrückt. Die Ergebnisse sind in Tab. 2 wiedergegeben.

Tabelle 2

Gewächshaus-Versuch an Gerste

Wirkung in % 17 Tage nach Behandlung
Wasseraufwandmenge: 300 l/ha

| Formulierung aus Tab. 1 | Dosierung : g Wirkstoff/ha | | | | |
|---|---|---|---|---|---|
| Nr. | 31,25 | 62,5 | 125 | 250 | 500 |
| Vergleichsmittel | - | 7 | 67 | 87 | 88 |
| 1 | - | 25 | 80 | 96 | 100 |
| 2 | - | 25 | 78 | 94 | 99 |
| 3 | - | 20 | 75 | 93 | 98 |

## Patentansprüche

1. Flüssige herbizide Mittel, gekennzeichnet durch einen Gehalt an einer Verbindung der Formel

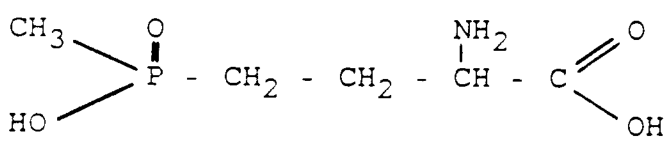

in Form des Racemates oder des L-Enantiomeren,

deren Niederalkylestern oder Salzen mit Säuren oder Basen (I), in Kombination mit Tensiden in Form von
   a) $(C_{12}-C_{18})$-Alkyldimethyl-, $(C_{10}-C_{18})$-Fettsäureamidopropyldimethyl- oder $(C_{10}-C_{18})$-Fettsäureamidoethyldimethyl-aminoxiden.

2. Herbizide Mittel gemäß Anspruch 1, dadurch gekennzeichnet, daß sie als Tenside $(C_{12}-C_{18})$-Alkyldimethylaminoxide oder deren Mischungen mit $(C_{10}-C_{18})$-Fettalkoholpolyglykolethersulfaten enthalten.

3. Herbizide Mittel gemäß Anspruch 1 oder 2, dadurch gekennzeichnet, daß sie neben 5-40 Gew.-% einer Verbindung I den 0,5-8-fachen Gewichtsanteil an den erfindungsgemäßen Tensiden enthalten.

4. Verfahren zur Bekämpfung von unerwünschten Pflanzen, dadurch gekennzeichnet, daß man auf diese oder die landwirtschaftlich genutzten Flächen eine wirksame Menge eines herbiziden Mittels gemäß einem oder mehreren der Ansprüche 1-3 appliziert.

## Claims

1. A liquid herbicidal agent containing a compound of the formula

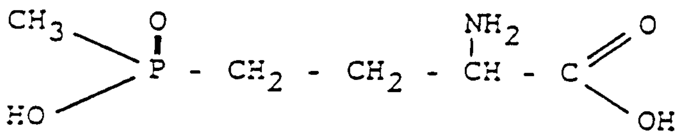

in the form of the racemate or of the L enantiomer, lower alkyl esters thereof or salts thereof with acids or bases (I) in combination with surfactants in the form of

a) ($C_{12}$-$C_{18}$)-alkyldimethyl-, ($C_{10}$-$C_{18}$)-fatty acid amidopropyldimethyl- or ($C_{10}$-$C_{18}$)-fatty acid amido ethyldimethylamine oxides.

2. A herbicidal agent as claimed in claim 1, which contains, as surfactants, ($C_{12}$-$C_{18}$)-alkyldimethylamine oxides, or their mixtures with ($C_{10}$-$C_{18}$)-fatty alcohol polyglycol ether sulfates.

3. A herbicidal agent as claimed in claim 1 or 2, which contains, besides 5-40 % by weight of a compound I, the 0.5-8-fold proportion by weight of the surfactants according to the invention.

4. A method of controlling undesired plants, wherein an active amount of a herbicidal agent as claimed in one or more of claims 1-3 is applied to these plants or the agricultural areas.

## Revendications

1. Agents herbicides liquides, caractérisés en ce qu'ils contiennent un composé de formule

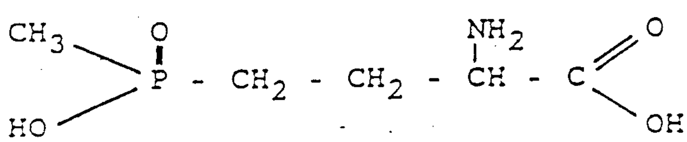

sous forme du racémate ou de l'énantiomère L,

leurs esters alkyliques inférieurs ou leurs sels avec des acides ou des bases (I), en combinaison avec des tensioactifs sous forme

a) d'oxydes de (alkyle en $C_{12}$-$C_{18}$)-diméthylamine, de (acide gras en $C_{10}$-$C_{18}$)-amidopropyldiméthylamine ou de (acide gras en $C_{10}$-$C_{18}$)-amidoéthyldiméthylamine.

2. Agents herbicides selon la revendication 1, caractérisés en ce qu'ils contiennent en tant que tensioactifs des oxydes de (alkyle en $C_{12}$-$C_{18}$)-diméthylamine ou leurs mélanges avec des (alcools gras en $C_{10}$-$C_{18}$)-sulfates polyéthoxylés.

3. Agents herbicides selon la revendication 1 ou 2, caractérisés en ce qu'ils contiennent, outre 5 à 40 % en poids d'un composé I, 0,5-8 fois plus, en poids, des tensioactifs selon l'invention.

**4.** Procédé pour lutter contre les végétaux indésirables, caractérisé en ce qu'on applique sur ces derniers ou sur des surfaces à utilisation agricole une quantité efficace d'un agent herbicide selon une ou plusieurs des revendications 1-3.